# EUROPÄISCHE PATENTSCHRIFT

(11) **EP 3 441 151 B1**
(45) Veröffentlichungstag und Bekanntmachung des Hinweises auf die Patenterteilung: **11.05.2022**
(21) Anmeldenummer: 18184668.4
(22) Anmeldetag: 20.07.2018
(51) Int. Cl.: B08B 9/04, E03F 9/00, B08B 9/043, G01B 5/12, G01B 11/12, F16L 101/30, F16L 101/12

(54) **VERFAHREN ZUM BEARBEITEN EINES KANALROHRS MIT EINEM FRÄSWERKZEUG**
METHOD FOR PROCESSING A SEWER PIPE WITH A MILLING TOOL
PROCÉDÉ DE TRAITEMENT D'UN TUYAU D'ÉGOUT AVEC UN OUTIL DE FRAISAGE

(30) Priorität: 27.07.2017 DE 102017117011
(43) Veröffentlichungstag der Anmeldung: 13.02.2019
(73) Patentinhaber: IBAK Helmut Hunger GmbH & Co. KG, 24148 Kiel (DE)
(72) Erfinder: Weber, Manfred, 24253 Passade (DE)
(74) Vertreter: Lobemeier, Martin Landolf

(56) Entgegenhaltungen:
- DE-A1- 3 715 653
- DE-U1- 9 209 821
- DE-U1- 20 308 761
- US-A1- 2008 012 310

## Beschreibung

Die Erfindung betrifft ein Verfahren zum Bearbeiten eines Kanalrohrs mit einer ein Fräswerkzeug aufweisenden Kanalrohrsanierungseinheit.

Die Sanierung eines Kanalrohrs ist zeit- und arbeitsaufwändig. Insbesondere ist es bei Arbeiten an der Rohrwandung häufig schwierig die Rohrwandung (unter optischer Kontrolle) so zu bearbeiten, dass die Sanierung vollzogen, weitergehende Beschädigungen aber vermieden werden. Hierbei erfordert speziell der Einsatz einer Kanalrohrsanierungseinheit mit einem Fräswerkzeug besondere Erfahrung und Geschick.

Einige Beispiele von solchen Verfahren sind aus den DE 37 15 653 A1, DE 203 08 761 U, US 2008/012310 A1 und DE 92 09 821 U1 bekannt.

Aufgabe der Erfindung ist es daher, ein Verfahren zum Bearbeiten eines Kanalrohrs mit einer ein Fräswerkzeug aufweisenden Kanalrohrsanierungseinheit zu schaffen, das weitgehend automatisiert erfolgen kann.

Diese Aufgabe wird erfindungsgemäß durch das Verfahren mit den Merkmalen von Anspruch 1 gelöst. Die Unteransprüche geben jeweils vorteilhafte Ausgestaltungen der Erfindung wieder.

Erfindungsgemäß sieht das Verfahren zum Bearbeiten eines Kanalrohrs mit einer ein Fräswerkzeug aufweisenden Kanalrohrsanierungseinheit die folgenden Schritte vor:
- Abtasten der Rohrwandung mit dem Fräswerkzeug an drei in einer Ebene senkrecht zur Achse des
   Kanalrohrs angeordneten, voneinander beabstandeten Punkten;
- Berechnen des Umkreises durch die drei abgetasteten Punkte; und
- Verschwenken des Fräswerkzeug entlang des Umkreises bei gleichzeitigem Bearbeiten des Kanalrohrs.

Bevorzugt ist vorgesehen, dass das Abtasten relativ zur Kanalrohrsanierungseinheit erfolgt und damit Berechnung der

Nennweite des Kanalrohrs und Bearbeitung des Kanalrohrs in einem Schritt vorgenommen werden.

Nach einer weiteren bevorzugten Ausgestaltung sieht das Verfahren auch ein Vergleichen des berechneten Umkreises mit einer Nennweiten aufweisenden Wertetabelle und Auswählen der dem berechneten Umkreis am nächsten kommenden Nennweite als Umkreis vor. Dadurch kann sichergestellt werden, dass das Fräswerkzeug das zu sanierende Rohr nicht unabsichtlich beschädigt.

Wird bei der Arbeit im Kanalrohr festgestellt, dass der berechnete Umkreis, d.h. die berechnete Nennweite des Kanalrohrs, geringer ist als die tatsächliche vorbestimmte Nennweite des Kanalrohrs, wird das Fräswerkzeug besonders bevorzugt zunächst entlang des berechneten Umkreises verschwenkt und der Umkreis während der Bearbeitung der Rohrwandung bis zum Erreichen einer vorbestimmten Nennweite vergrößert. Dadurch können beispielsweise in das Kanalrohr eingewachsene Wurzeln automatisiert beseitigt werden, ohne das Rohr zu beschädigen.

## Patentansprüche

1. Verfahren zum Bearbeiten eines Kanalrohrs mit einer ein Fräswerkzeug aufweisenden Kanalrohrsanierungseinheit,
aufweisend die folgende Schritte:
- Abtasten der Rohrwandung mit dem Fräswerkzeug an drei in einer Ebene senkrecht zur Achse des Kanalrohrs angeordneten, voneinander beabstandeten Punkten,
- Berechnen des Umkreises durch die drei abgetasteten Punkte, und
- Verschwenken des Fräswerkzeugs entlang des Umkreises bei gleichzeitigem Bearbeiten des Kanalrohrs.

2. Verfahren nach Anspruch 1, **gekennzeichnet durch** Vergleichen des berechneten Umkreises mit einer Nennweiten aufweisenden Wertetabelle und Auswählen der dem berechneten Umkreis am nächsten kommenden Nennweite als Umkreis.

3. Verfahren nach einem der vorhergehenden Ansprüche, **gekennzeichnet durch** Verschwenken des Werkzeugs entlang des berechneten Umkreises und Vergrößern des Umkreises bis zum Erreichen einer vorbestimmten Nennweite.

## Claims

1. Method for processing a sewer pipe using a sewer pipe sanitation unit having a milling tool,
comprising the following steps:
- scanning the pipe wall with the milling tool at three mutually spaced points that are arranged in a plane perpendicular to the axis of the sewer pipe,
- calculating the perimeter by means of the three scanned points, and
- pivoting the milling tool along the perimeter while processing the sewer pipe at the same time.

2. Method according to claim 1, **characterized by** comparing the calculated perimeter with a table of values having nominal widths and selecting the nominal width closest to the calculated perimeter as the perimeter.

3. Method according to either of the preceding claims, **characterized by** pivoting the tool along the calculated perimeter and enlarging the perimeter until a predetermined nominal width is reached.

## Revendications

1. Procédé de traitement d'un tuyau d'égout au moyen d'une unité de réhabilitation de tuyau d'égout présentant un outil de fraisage,
présentant les étapes suivantes :
- balayage de la paroi de tuyau au moyen de l'outil de fraisage en trois points espacés les uns des autres et disposés dans un plan perpendiculaire à l'axe du tuyau d'égout,
- calcul du périmètre passant par les trois points balayés, et
- pivotement de l'outil de fraisage le long du périmètre tout en traitant simultanément le tuyau d'égout.

2. Procédé selon la revendication 1, **caractérisé par** la comparaison du périmètre calculé avec un tableau de valeurs présentant des largeurs nominales et par la sélection de la largeur nominale la plus proche du périmètre calculé comme périmètre.

3. Procédé selon l'une des revendications précédentes, **caractérisé par** le pivotement de l'outil le long du périmètre calculé et par l'agrandissement du périmètre jusqu'à ce qu'une largeur nominale prédéterminée soit atteinte.
